# EUROPEAN PATENT SPECIFICATION

(11) **EP 1 593 303 B1**
(45) Date of publication and mention of the grant of the patent: **04.04.2007**
(21) Application number: 05003859.5
(22) Date of filing: 23.02.2005
(51) Int. Cl.: A01K 1/015

(54) **Novel form of mat for poultry breeding batteries**
Neue Mattenform für Käfiganlagen zum Aufzüchten von Geflügel
Nouvelle forme de tapis pour l'élevage de volaille dans des batteries

(30) Priority: 07.05.2004 IT MI20040931
(43) Date of publication of application: 09.11.2005
(73) Proprietor: TECNO POULTRY EQUIPMENT S.r.l., 35010 Campo di S. Martino, PD (IT)
(72) Inventor: Lago, Leopoldo, 35013 Cittadella Padova (IT)
(74) Representative: Petruzzelli, Antonio

(56) References cited:
- US-A- 3 641 983
- US-A- 3 726 255
- US-A- 4 768 465

## Description

The present invention describes a mat for poultry breeding batteries that allows greater cleanliness to be achieved of the base of the nest wherein it is placed and a greater ease of maintenance.

The presence of mats placed on the base of the nest inside batteries for poultry breeding is known and provision is made by current legislation: the nest is in fact the place intended, not exclusively, for the laying of eggs by the hen or by a group of hens (in this case it is known as "group nest") and is set apart inside the cage where the animal or group of animals has the possibility of isolating itself or themselves.

According to the state of the art, the base of the nest is covered by a mat which is attached to the underlying grid by means of clips or known means as disclosed in US-A-4768465: in that previous patent said means have the form of vertical flexible pegs wich are pressed into openings in the subfloor and are integral with said mat.

The mat must also provide for the possibility of being removed to allow its necessary cleaning and sanitisation and must be washed frequently to prevent the incrustation of droppings on the surface: although holes are provided, the droppings tend to accumulate on the inside edges of the mat, or on the bristles if provided on the surface.

The means for keeping the mat separated from the nest as disclosed in US-A 4 768 465 need a subfloor with custom-made openings for housing said means. Other prior-art mats, as US-A-3 641 983, do not provide means for attaching to the underlying grid, or provide means that are not integral with said mat.

The object therefore of the present invention is that of providing a mat which does not allow in any case contact of the body or of the feet of the animal with the footrest net, as expressly laid down by law, with specific means integral with said mat for attaching to an underlying grid.

Another object of the present invention is that of providing a mat which allows the droppings deposited by the hens inside the nest to exit immediately through the holes provided, which are of ample and similar size to that of the underlying grid whose shape it matches, as will be described in greater detail herein below. One advantage of this solution is that the eggs, laid in the nest, not encountering excrement, are not soiled and exit clean.

A further object of the present invention is that of providing a mat which can be self-cleaning, that is to say the excrement is discharged into the underlying collector by the simple treading of the animals who push it into the through holes. The resulting advantage consists of a considerable saving in terms of manual work of cleaning the mat and in that, in this way, the onset of oral-faecal disease in the animal are avoided.

Another object of the present invention is that of providing a mat which allows considerable simplicity of removal and assembly: in this way end of cycle cleaning is facilitated or also that work which is required during the breeding phase. Said object is obtained by means of the special structure of the present invention, as will be described in greater detail herein below.

Last but not least, the object of the present invention is that of providing a mat which has lower manufacturing costs than mats currently produced, also to the benefit of the end user.

These and other aspects will be made clearer on reading the following preferred embodiment of the invention, to be read as a nonlimiting example of the more general concept claimed.

The following description refers to the accompanying drawings, wherein:

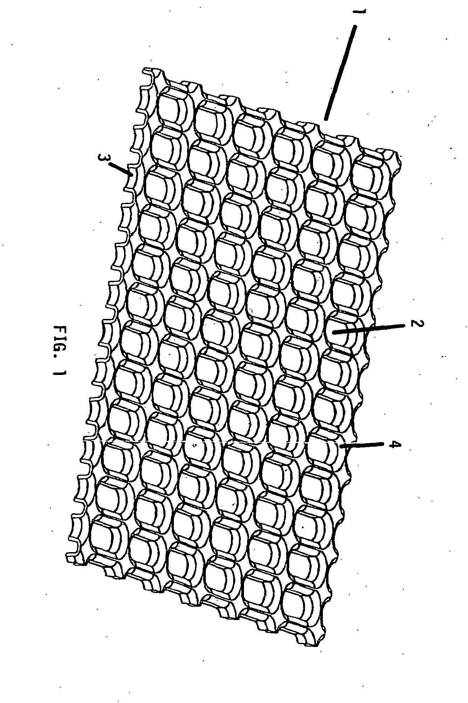

Figure 1 is a perspective view of the upper part of the present invention.

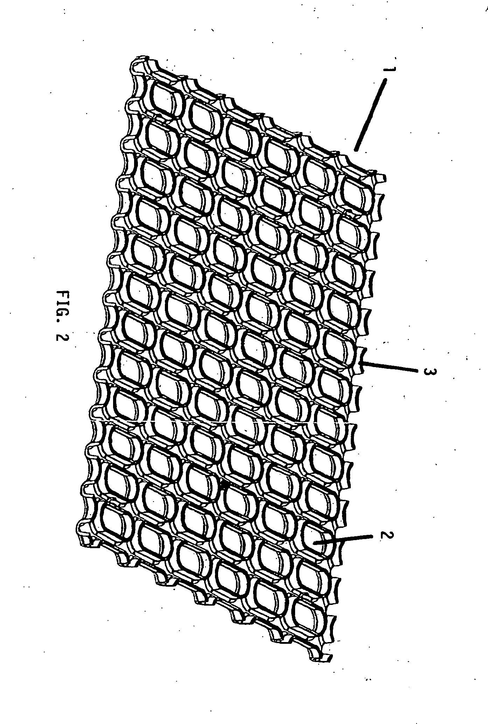

Figure 2 is a perspective view of the lower part of the present invention.
Figure 3 is a perspective view of the present invention placed on the base grid.

Referring to the drawings, the mat 1 is formed by a thickness of material suitable for the purpose, provided with a series of through holes 2. The holes 2 are essential for ensuring discharge of the droppings which, by accumulating, could lead to rapid deterioration in the conditions of hygiene with the risk of the onset of disease in the birds.

For the above reason the holes 2, in addition to being numerous, are of ample size so as to allow easy passage of the excrement, without the risk of clogging which would invariably jeopardise their main aim.

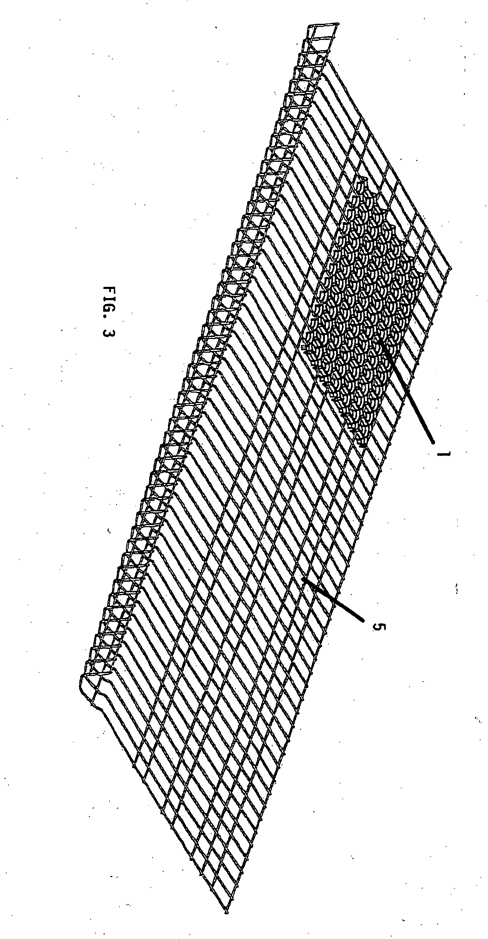

The inside edge of said holes 2 is bordered by a section of material 3 which remains perpendicular to the walk surface of the same mat. As shown in Figure 3, this special configuration allows the mat, resting on the grid 5, to remain attached to the same since these vertical sections are inserted in the meshes of the grid. The holes 2 are in fact shaped exactly like the meshes of the underlying grid 5: in this way, in addition to being of such a size as to allow discharge of the droppings, they match perfectly the meshes of the same grid 5. Thus a sort of jointing is obtained by means of the vertical sections 3 which are inserted in the meshes and contrast the horizontal sliding of the mat on the grid 5. Said vertical sections 3 also prevent the animal from coming into contact in any way with the grid 5, as laid down by current legislation, even when the feet enter the holes, since said sections also cover the grid 5 internally and not only superficially.

The pitch of the holes of the mat must coincide with that of the grid or with one of its submultiples: only in this way can accurate jointing of the holes of the mat on those of the grid be obtained.

The surface of the hole 2 is also provided with an inlet 4 formed by sections slanting in the direction of the centre of the hole 2. The discharge of droppings by the treading of the animals is therefore facilitated, also considering that said inlets between one hole and the other are particularly close together.

Such a configuration minimises the strictly horizontal surface of the mat 1, since most of said surface is formed by spaces created by the through holes and by solids which comprise for most of the surface sections slanting towards the centre of the holes 2. In this way droppings are prevented from accumulating and are pushed and discharged through the holes into the collector below the grid.

The fact that the accumulation of droppings on the mat is contrasted by the means mentioned above also fulfils a criterion of self-cleaning which makes the same mat particularly hygienic and such as not to require thorough mechanical cleaning, with precious saving in maintenance times and, in a final yet important analysis, of costs.

## Claims

1. Mat (1) for poultry breeding batteries provided with through holes (2), **characterised in that** it is provided with a system integrated in its structure for hooking to the base grid (5) whereon it is placed, said system consisting of holes (2) with vertical sections (3) which are inserted vertically in the meshes of the underlying base grid (5), whereon it is placed, attaching it to said grid (5), said holes with a pitch in both perpendicular directions of the horizontal plane that must be equal to, or a submultiple of, the pitch of the meshes of the underlying grid (5).

2. Mat (1) for poultry breeding batteries provided with through holes (2), according to claim 1, **characterised in that** said vertical sections (3) are formed by the vertical development of part and/or the whole of the internal perimeter of the through holes (2).

3. Mat (1) for poultry breeding batteries provided with through holes (2), according to claim 1, **characterised in that** the mouth of each hole (2) is provided with an inlet (4) formed by sections slanting towards the centre of the same.

4. Mat (1) for poultry breeding batteries provided with through holes (2), according to claim 1, **characterised in that** the mat (1) can be jointed to the underlying grid (5) through the simple insertion of the vertical sections (3) of the mat in the meshes of the grid (5).

5. Mat (1) for poultry breeding batteries provided with through holes (2), according to claim 1, **characterised in that** the mat (1) can be jointed to the underlying grid (5) through the hooking of the vertical sections (3) of the mat in the meshes of the grid (5) by means of special thickenings or other known means integrated in the structure of the mat.

## Patentansprüche

1. - Matte (1) für Käfiganlagen zum Aufzüchten von Geflügel, ausgestattet mit Durchgangslöchern (2), **dadurch gekennzeichnet, dass** sie mit einem strukturintegrierten System zum Einhaken an das Grundgitter (5), auf das sie gelegt wird, ausgerüstet ist, wobei genanntes System aus Löchern (2) mit senkrechten Ebenen (3) besteht, die senkrecht in die Einschnitte des darunter liegenden Grundgitters (5) eingesetzt werden, auf das es platziert wird, um es an genanntes Gitter (5) anzuschliessen und genannte Löcher einen Abstand in beide senkrechte Richtungen der waagerechten Ebene haben, der so gross wie oder teilbar durch den Abstand der Einschnitte des darunter liegenden Gitters (5) sein muss.

2. - Matte (1) für Käfiganlagen zum Aufzüchten von Geflügel, ausgestattet mit Durchgangslöchern (2) nach Anspruch 1, **dadurch gekennzeichnet, dass** genannte senkrechte Ebenen (3) durch die senkrechte Entwicklung eines Teils und/oder des gesamten Innenumfangs der Durchgangslöcher (2) gebildet sind.

3. - Matte (1) für Käfiganlagen zum Aufzüchten von Geflügel, ausgestattet mit Durchgangslöchern (2) nach Anspruch 1, **dadurch gekennzeichnet, dass** die Mündung von jedem Loch (2) mit einem Einlauf (4) ausgestattet ist, der aus Ebenen gebildet ist, die schräg zu dessen Mittelpunkt liegen.

4. - Matte (1) für Käfiganlagen zum Aufzüchten von Geflügel, ausgestattet mit Durchgangslöchern (2) nach Anspruch 1, **dadurch gekennzeichnet, dass** die Matte (1) mit dem darunter liegenden Gitter (5) durch das einfache Einsetzen der senkrechten Ebenen (3) der Matte in die Eingriffe des Gitters (5) verbunden werden kann.

5. - Matte (1) für Käfiganlagen zum Aufzüchten von Geflügel, ausgestattet mit Durchgangslöchern (2) nach Anspruch 1, **dadurch gekennzeichnet, dass** die Matte (1) mit dem darunter liegenden Gitter (5) durch das Einhaken der senkrechten Ebenen (3) der Matte in die Eingriffe des Gitters (5) durch spezielle Dickungsmitteln oder andere bekannte in die Mattenstruktur integrierte Mitteln verbunden werden kann.

## Revendications

1. Tapis (1) pour batteries d'élevage de volaille pourvu de trous passants (2), **caractérisé par le fait qu'**il est pourvu d'un système intégré dans sa structure pour l'accrocher au grillage de base (5) sur lequel il est placé, le dit système consistant en des trous (2) avec des sections verticales (3) qui sont introduites verticalement dans les mailles du grillage de base sous-jacent (5), sur lequel il est placé, l'attachant au dit grillage (5), les dits trous ayant une inclinaison dans les deux directions perpendiculaires du plan horizontal qui doit être égale à, ou un sous-multiple de, l'inclinaison des mailles du grillage sous-jacent (5).

2. Tapis (1) pour batteries d'élevage de volaille pourvu de trous passants (2), selon la revendication 1, **caractérisé par le fait que** les dites sections verticales (3) sont formées par le développement vertical des parties et/ou de l'entièreté du périmètre intérieur des trous passants (2).

3. Tapis (1) pour batteries d'élevage de volaille pourvu de trous passants (2), selon la revendication 1, **caractérisé par le fait que** l'ouverture de chaque trou (2) est pourvue d'une entrée (4) formée par des sections inclinées vers son centre.

4. Tapis (1) pour batteries d'élevage de volaille pourvu de trous passants (2), selon la revendication 1, **caractérisé par le fait que** le tapis (1) peut être fixé au grillage sous-jacent (5) à travers la simple introduction des sections verticales (3) du tapis dans les mailles du grillage (5).

5. Tapis (1) pour batteries d'élevage de volaille pourvu de trous passants (2), selon la revendication 1, **caractérisé par le fait que** le tapis (1) peut être attaché au grillage sous-jacent (5) en accrochant les sections verticales (3) du tapis dans les mailles du grillage (5) au moyen d'épaisseurs spéciales ou d'autres moyens connus intégrés dans la structure du tapis.
